(19) Europäisches Patentamt / European Patent Office / Office européen des brevets

(11) **EP 4 077 047 B1**

(12) **FASCICULE DE BREVET EUROPEEN**

(45) Date de publication et mention de la délivrance du brevet:
**12.11.2025 Bulletin 2025/46**

(21) Numéro de dépôt: **20820220.0**

(22) Date de dépôt: **10.12.2020**

(51) Classification Internationale des Brevets (IPC):
*B60Q 1/14* *(2006.01)*    *F21W 102/145* *(2018.01)*
*F21W 102/155* *(2018.01)*    *G06V 10/141* *(2022.01)*

(52) Classification Coopérative des Brevets (CPC):
**B60Q 1/143; G06V 10/141;** B60Q 2300/056;
B60Q 2300/41; B60Q 2300/42; F21W 2102/14;
F21W 2102/155

(86) Numéro de dépôt international:
**PCT/EP2020/085598**

(87) Numéro de publication internationale:
**WO 2021/122329 (24.06.2021 Gazette 2021/25)**

(54) **PROCÉDÉ DE CONTRÔLE D'UN SYSTÈME D'ÉCLAIRAGE D'UN VÉHICULE AUTOMOBILE**

VERFAHREN ZUR STEUERUNG DES BELEUCHTUNGSSYSTEMS EINES KRAFTFAHRZEUGS

METHOD FOR CONTROLLING A MOTOR VEHICLE LIGHTING SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2019 FR 1914495**

(43) Date de publication de la demande:
**26.10.2022 Bulletin 2022/43**

(73) Titulaire: **Valeo Vision**
**93012 Bobigny Cedex (FR)**

(72) Inventeur: **BENAMAR, Fatima**
**93012 BOBIGNY Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
EP-A1- 2 700 537        EP-A1- 3 517 362
WO-A2-2014/184634        DE-A1- 102011 006 570
DE-A1- 102012 200 048        JP-A- 2015 214 281

**EP 4 077 047 B1**

## Description

L'invention concerne le domaine de l'éclairage automobile. Plus précisément, l'invention concerne un procédé de contrôle d'un système d'éclairage d'un véhicule automobile pour la réalisation d'un faisceau lumineux de type route pixélisé non éblouissant.

Il est connu d'équiper les véhicules automobiles d'un système de capteur pour détecter un objet cible sur la route à ne pas éblouir et d'un système d'éclairage pour émettre un faisceau non éblouissant en fonction de la position de cet objet.

A cet effet, ces systèmes d'éclairage sont capables d'émettre un faisceau d'éclairage de la route segmenté horizontalement et sont pourvus d'une unité de contrôle capable d'allumer et/ou d'éteindre et/ou de modifier l'intensité lumineuse de chacun des faisceaux lumineux élémentaires formant les segments de ce faisceau. Il est ainsi connu de contrôler ce type système d'éclairage de sorte à éteindre un segment lumineux, s'étendant verticalement sur la totalité du faisceau d'éclairage, centré au niveau de l'objet cible. De tels systèmes d'éclairage sont ainsi aptes à éclairer la route de façon plus importante qu'un faisceau d'éclairage de type croisement, sans éblouir d'autres utilisateurs de cette route.

Toutefois, les technologies des systèmes d'éclairage récents permettent d'émettre un faisceau pixélisé horizontalement et verticalement et dont la résolution verticale est particulièrement élevée. Pour ce type de technologie, il existe un intérêt pour contrôler le système d'éclairage de sorte à générer à un faisceau d'éclairage de la route pixélisé présentant une zone sombre au niveau de l'objet cible tout en laissant de la lumière au-dessus et en dessous de cette zone sombre. Un tel faisceau d'éclairage pixélisé, contrairement à un faisceau contrôlé de façon segmenté, permettrait en effet au conducteur de percevoir les panneaux de signalisation de type portique ou de percevoir des objets sur la route ou des marquages routier en champ proche, ou encore de ne pas perturber le conducteur lorsque la zone sombre se déplace dans le faisceau d'éclairage pour suivre l'objet cible lorsque celui-ci se déplace.

Il existe ainsi un besoin pour un procédé permettant de contrôler la génération de cette zone sombre dans un tel faisceau pixélisé de sorte à ce qu'elle présente des coupures supérieure et inférieur bordant l'objet cible et laissant de la lumière au-dessus et en dessous de cet objet cible. La présente invention vise à répondre à ce besoin.

A ces fins, l'invention a pour objet un procédé de commande d'un système d'éclairage d'un véhicule automobile hôte, le système d'éclairage comprenant une pluralité de sources lumineuses élémentaires contrôlables sélectivement, chaque source lumineuse élémentaire étant apte à émettre un faisceau lumineux élémentaire dont l'ouverture angulaire verticale est inférieure à 1°, le procédé comportant les étapes suivantes :

> a. Détection d'un objet cible par un système de capteur du véhicule hôte ;
> b. Détermination d'une distance relative entre un point donné du système de capteur du véhicule hôte et un point détecté de l'objet cible et détermination d'une pente de la route sur laquelle est disposé l'objet cible;
> c. Détermination, à partir de ladite distance relative et de ladite pente, d'un angle inférieur et d'un angle supérieur entre un point donné du système d'éclairage du véhicule hôte et respectivement une coupure haute et une coupure basse destinées à border ensemble verticalement l'objet cible ;
> d. Contrôle des sources lumineuses élémentaires du système d'éclairage du véhicule hôte pour émettre un faisceau lumineux pixélisé de type route, une partie des sources lumineuses élémentaires étant contrôlées, en fonction desdits angles inférieur et supérieur, pour générer dans le faisceau lumineux une zone sombre s'étendant sensiblement entre lesdites coupures haute et basse.

On comprend que grâce à l'invention, il est possible de d'éteindre certains pixels dans un faisceau lumineux pixélisé émis par le système d'éclairage du véhicule hôte, de sorte à former une zone sombre dont les coupures supérieure et inférieure encadrent ou bordent l'objet cible, les positions de ces coupures étant définies à partir d'information relatives à la pente de la route sur laquelle circulent l'objet cible et le véhicule hôte.

Avantageusement, l'étape de détection de l'objet cible peut être réalisée par un dispositif de type scanner laser, ou de type LIDAR (de l'anglais Light Detection And Ranging), muni d'un émetteur/récepteur de lumière et d'un calculateur capable de mesurer le temps de vol de la lumière émise et reçue après réflexion sur la route ou sur un objet pour détecter la présence dudit objet. Le cas échéant, ladite distance relative peut être déterminée par ce calculateur au moyen dudit temps de vol mesuré.

Avantageusement, l'information relative à la pente peut être obtenue au moyen d'un système de navigation du véhicule hôte, en combinaison avec la distance relative.

De préférence, le procédé comporte une étape intermédiaire de comparaison de ladite pente à un seuil inférieur et un seuil supérieur, la réalisation de l'étape de détermination des angles inférieur et supérieur étant conditionnée au fait que ladite pente soit compris entre le seuil inférieur et le seuil supérieur. Le seuil inférieur pourra par exemple être une pente supérieure à -15%, et notamment être égal à -13%. Le seuil supérieur pourra par exemple être une pente inférieure à +15%, et notamment être égal à +13%. Cette étape de comparaison trouve son origine dans le fait que les fonctions d'éclairage de la route adaptatif ne peuvent être activées que lorsque le véhicule hôte roule à une vitesse suffisamment élevée. Or, il a été constaté que, compte tenu des pentes des routes sur lesquelles sont susceptibles de circuler les véhicules automobiles à vitesse élevée, il n'est pas nécessaire de générer une zone sombre dans le faisceau lumineux pixélisé lorsque la pente de la route n'est pas comprise dans l'intervalle des seuils inférieur et supérieur, puisque le véhicule hôte ne peut pas dans ce cas circuler avec une vitesse suffisante pour permettre l'activation de la fonction d'éclairage de la route adaptatif.

Avantageusement, le procédé comporte une étape de détermination, à partir de ladite distance relative et de ladite pente, d'une hauteur relative entre ledit point donné du système d'éclairage du véhicule hôte et un point donné de l'objet cible au niveau duquel doit être positionnée ladite coupure basse, les angles inférieur et supérieur étant déterminés à partir de ladite distance relative, de ladite pente et de ladite hauteur relative. Le cas échéant, le procédé peut comporter une étape de détermination de la hauteur relative étant déterminée en outre en moyen de ladite distance au début de la pente. Cette distance pourra notamment être obtenue au moyen du système de navigation du véhicule hôte. Si on le souhaite, le procédé comporte une étape de détermination de la hauteur d'une source lumineuse de l'objet cible, comme un feu arrière ou d'un projecteur avant d'un véhicule cible, la hauteur relative étant déterminée au moyen de ladite hauteur. En variante, ladite hauteur de la source lumineuse de l'objet cible peut être prédéterminée. Par exemple, ladite hauteur relative pourra être obtenue au moyen de l'équation suivante :

[Math 1]

$$Z_C = \frac{H_{HL}}{\sin(\frac{\pi}{2} - S)} + \tan(S).(X_{HC} - X_S) + H_H$$

Où $Z_C$ est la hauteur relative entre le véhicule hôte et l'objet cible, $H_{HL}$ la hauteur d'une source lumineuse de l'objet cible, S la pente de la route sur laquelle est disposée l'objet cible, $X_{HC}$ la distance séparant le véhicule hôte et l'objet cible, $X_S$ la distance séparant le véhicule hôte du début de la pente de la route sur laquelle est disposée l'objet cible et $H_H$ la hauteur du système de capteur du véhicule hôte.

Avantageusement, l'étape de détermination de ladite hauteur relative est une étape de détermination d'une hauteur relative entre ledit point donné du système d'éclairage du véhicule hôte et dudit point donné de l'objet cible au niveau duquel doit être positionnée ladite coupure basse à un instant donné et le procédé comporte une étape de prédiction d'une valeur de ladite hauteur relative à un instant futur par rapport à l'instant donné. L'instant donné peut par exemple correspondre à l'instant de la détection de l'objet cible par le système de capteur, et les angles inférieur et supérieur peuvent être déterminés à partir de la valeur de ladite hauteur relative prédite. Cette caractéristique permet de compenser la latence des systèmes de capteur et d'éclairage du véhicule automobile. En effet, entre l'instant donné où l'objet cible a été détecté par le système de capteur et l'instant où la zone sombre est générée dans le faisceau lumineux émis par le système d'éclairage, l'objet cible peut s'être déplacé de sorte que la zone sombre ne le borde plus sensiblement et qu'il peut ainsi être ébloui par le faisceau lumineux. La prédiction de la valeur de la hauteur relative à un instant futur permet ainsi de positionner les coupures supérieure et inférieure de la zone sombre au niveau de la position de l'objet cible à cet instant futur.

Le cas échéant, l'étape de prédiction peut comporter une étape de détermination d'une vitesse verticale de l'objet cible, la prédiction de la valeur de la hauteur relative à un instant futur étant réalisée à l'aide de la vitesse verticale de l'objet cible. Par exemple, la vitesse verticale peut être déterminée par dérivation de la valeur de la hauteur relative déterminée au cours du temps.

Dans un mode de réalisation de l'invention, la valeur de l'angle inférieur est déterminée au moyen de ladite hauteur relative et de ladite distance relative. Par exemple, la valeur de l'angle inférieur peut être obtenue au moyen de l'équation suivante :

[Math 2]

$$V_{inf} = \tan^{-1}(\frac{Z_C}{X_{HC}})$$

Où $V_{inf}$ est l'angle inférieur, $Z_C$ est la hauteur relative entre le véhicule hôte et l'objet cible et $X_{HC}$ la distance séparant le véhicule hôte et l'objet cible.

Avantageusement, le procédé comporte une étape de détermination de la hauteur de l'objet cible, la valeur de l'angle supérieur étant déterminée au moyen de la valeur de l'angle inférieur et de ladite hauteur déterminée.

Avantageusement, l'étape de détection de l'objet cible comporte la classification du type de l'objet cible parmi un ensemble de types d'objet cible prédéterminés, et la hauteur de l'objet cible est déterminée en fonction du type de l'objet cible classifié. Par exemple, le type de l'objet peut être obtenu au moyen d'un procédé de traitement des signaux acquis par le récepteur du système de capteur et mis en œuvre par le calculateur du système de capteur. Le cas échéant, l'ensemble de types d'objet cible prédéterminés peut notamment comprendre un piéton, un vélo, une voiture ou un camion, chaque type d'objet cible prédéterminé étant associé à une hauteur d'objet cible prédéterminée.

En variante, la hauteur de l'objet cible peut être obtenue au moyen d'un procédé de traitement des images acquises par une caméra du système de capteur du véhicule hôte, mis en œuvre par le calculateur du système de capteur.

Par exemple, la valeur de l'angle supérieur peut être déterminée au moyen de l'équation suivante :

[Math 3]

$$V_{sup} = \tan^{-1}\left(\frac{H_C - H_{HL})}{X_{HC}}\right) + V_{inf}$$

Où $V_{sup}$ est l'angle supérieur, $H_{HL}$ la hauteur d'une source lumineuse de l'objet cible, $X_{HC}$ la distance séparant le véhicule hôte et l'objet cible, $H_c$ la hauteur de l'objet cible et $V_{inf}$ la valeur de l'angle inférieur.

Avantageusement, l'étape de contrôle des sources lumineuses élémentaires du système d'éclairage du véhicule hôte comporte l'extinction de certaines sources lumineuses élémentaires susceptibles d'émettre chacune un faisceau lumineux élémentaire entre les coupures supérieure et inférieure. Par exemple, chaque source lumineuse élémentaire étant apte à émettre un faisceau lumineux selon un cône d'émission donné, défini par son ouverture angulaire donnée et sa direction d'émission, l'étape de contrôle pourra comporter une étape de sélection des sources lumineuses élémentaires dont les cônes d'émission sont verticalement au moins partiellement compris dans l'intervalle défini par les angles inférieur et supérieur. Le cas échéant, l'étape de contrôle des sources lumineuses élémentaires peut comporter l'extinction de certaines sources lumineuses élémentaires susceptibles d'émettre chacune un faisceau lumineux élémentaire entre les coupures supérieure et inférieure et entre des coupures latérales bordant l'objet cible. Par exemple, on pourra déterminer, à partir d'un angle latéral entre un point donné du système de capteur et un point détecté de l'objet cible, deux angles latéraux entre un point donné du système d'éclairage et une coupure latérale, respectivement gauche et droite, destinée à border latéralement l'objet cible.

L'invention a également pour objet un véhicule automobile comprenant un système de capteur, un système d'éclairage et un contrôleur, le contrôleur étant agencé pour mettre en œuvre le procédé selon l'une des revendications précédentes.

Avantageusement, le système d'éclairage comprend une pluralité de sources lumineuses élémentaires contrôlables sélectivement, chaque source lumineuse élémentaire étant apte à émettre un faisceau lumineux élémentaire dont l'ouverture angulaire verticale est inférieure à 1°. Le cas échéant, l'ensemble des sources lumineuses élémentaires peut être apte à émettre un faisceau lumineux pixélisé s'étendant verticalement dans une plage de -1° à +5° autour de l'horizon.

Avantageusement, les sources lumineuses élémentaires sont agencées de sorte que l'ouverture angulaire verticale des faisceaux lumineux élémentaires qu'elles sont aptes à émettre soit croissante en direction du haut du faisceau lumineux pixélisé. Si on le souhaite, le système d'éclairage peut comprendre :

a. une première pluralité de sources lumineuses élémentaires contrôlable sélectivement, chacune apte à émettre un faisceau lumineux élémentaire dont l'ouverture angulaire verticale est sensiblement de 0,25°, l'ensemble des sources de la première pluralité de sources lumineuses élémentaires étant apte à émettre un premier sous-faisceau lumineux pixélisé s'étendant verticalement dans une plage de -1° à +1° ;
b. une deuxième pluralité de sources lumineuses élémentaires contrôlable sélectivement, chacune apte à émettre un faisceau lumineux élémentaire dont l'ouverture angulaire verticale est sensiblement de 0,3°, l'ensemble des sources de la deuxième pluralité de sources lumineuses élémentaires étant apte à émettre un deuxième sous-faisceau lumineux pixélisé s'étendant verticalement dans une plage de +1° à +2° ;
c. une troisième pluralité de sources lumineuses élémentaires contrôlable sélectivement, chacune apte à émettre un faisceau lumineux élémentaire dont l'ouverture angulaire verticale est sensiblement de 0,35°, l'ensemble des sources de la troisième pluralité de sources lumineuses élémentaires étant apte à émettre un troisième sous-faisceau lumineux pixélisé s'étendant verticalement dans une plage de +2° à +3° ;
d. une quatrième pluralité de sources lumineuses élémentaires contrôlable sélectivement, chacune apte à émettre un faisceau lumineux élémentaire dont l'ouverture angulaire verticale est sensiblement de 0,4°, l'ensemble des sources de la quatrième pluralité de sources lumineuses élémentaires étant apte à émettre un quatrième sous-faisceau lumineux pixélisé s'étendant verticalement dans une plage de +3° à +5°.

Dans un mode de réalisation de l'invention, le système d'éclairage comporte un module lumineux comportant une source lumineuse pixélisée comportant une pluralité d'émetteurs élémentaires agencés en matrice, chacun des émetteurs élémentaires formant une source lumineuse élémentaire et étant activable sélectivement pour émettre un faisceau lumineux élémentaire ; et un élément optique de projection associé à ladite source lumineuse pixélisée pour projeter chacun desdits faisceaux lumineux élémentaires sur la route. Par exemple, la source lumineuse pixélisée comprend au moins une matrice d'éléments électroluminescents (appelée en anglais monolithic array), et notamment au moins une matrice de matrice d'éléments électroluminescents monolithique, aussi appelée matrice monolithique.

En variante, le module lumineux peut comporter une source de lumière formée par exemple d'au moins une diode électroluminescente émettant de la lumière et une matrice d'éléments optoélectroniques, et par exemple une matrice de micro-miroirs (également connue sous l'acronyme DMD, pour l'anglais Digital Micromirror Device) qui dirige les rayons lumineux issus de ladite au moins une source de lumière par réflexion vers un élément optique de projection.

La présente invention est maintenant décrite à l'aide d'exemples uniquement illustratifs et nullement limitatifs de la portée de l'invention, et à partir des illustrations jointes, dans lesquelles :

[Fig. 1] représente, schématiquement et partiellement, un véhicule automobile selon un mode de réalisation de l'invention ;

[Fig. 2] représente un procédé selon un mode de réalisation de l'invention, mis en œuvre par le véhicule automobile de la [Fig. 1] ;

[Fig. 3] représente une vue de côté d'une scène de route lors de la mise en œuvre du procédé de la [Fig. 2] par le véhicule de la [Fig. 1] ; et

[Fig. 4] représente une vue de face d'une scène de route lors de la mise en œuvre du procédé de la [Fig. 2] par le véhicule de la [Fig. 1].

Dans la description qui suit, les éléments identiques, par structure ou par fonction, apparaissant sur différentes figures conservent, sauf précision contraire, les mêmes références.

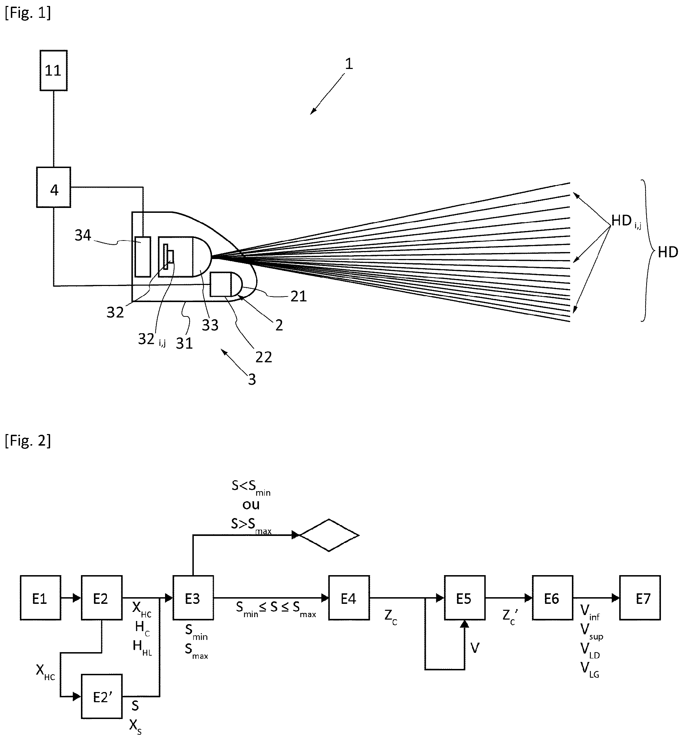

On a représenté en [Fig. 1] une vue partielle d'un véhicule automobile hôte 1 selon un mode de réalisation de l'invention. Le véhicule automobile hôte 1 comporte un système de capteur 2 comprenant un dispositif de type laser scanner 21. Dans l'exemple décrit, le laser scanner 21 est disposé dans un système d'éclairage 3, sous la forme d'un projecteur avant, du véhicule 1, et comporte un émetteur-récepteur agencé pour émettre de la lumière à travers la glace du projecteur 3 et pour recevoir cette lumière, après qu'elle ait été réfléchie. Le système de capteur 2 comporte en outre un calculateur 22 agencé pour mettre en œuvre différents procédés de traitement des signaux reçus par l'émetteur-récepteur du laser scanner 21. Le système d'éclairage 3 du véhicule hôte 1 comprend un module lumineux 31. Le module lumineux 31 comporte notamment une source de lumière pixélisée 32 associée à une lentille 33. Dans l'exemple décrit, la source lumineuse pixélisée 32 est une diode électroluminescente pixélisée monolithique dont chacun des éléments émetteurs de lumière forme une source lumineuse élémentaire $32_{i,j}$ pouvant être activée et contrôlée sélectivement par un contrôleur intégré pour émettre de la lumière vers la lentille 33, qui projette ainsi sur la route un faisceau lumineux élémentaire $HD_{i,j}$ dont l'intensité lumineuse est contrôlable. Chaque faisceau lumineux élémentaire $HD_{i,j}$ est projeté par la lentille dans un cône d'émission donné, défini par une direction d'émission donnée et une ouverture angulaire donnée. Ainsi, dans l'exemple décrit, l'ensemble des faisceaux lumineux élémentaires $HD_{i,j}$ forme ainsi un faisceau lumineux pixélisé HD présentant 500 pixels répartis sur 25 colonnes et 20 lignes, s'étendant verticalement sur une plage verticale angulaire de -1° à +5° et dont chaque pixel est formé par l'un de ces faisceaux lumineux élémentaires $HD_{i,j}$.

Chaque faisceau lumineux élémentaire $HD_{i,j}$ émis par l'une des sources lumineux élémentaires $32_{i,j}$ de la source 32 présente une ouverture verticale inférieure à 1°. Plus spécifiquement, les sources lumineuses élémentaires $32_{i,j}$ de la source 32 sont agencées de sorte que l'ouverture angulaire verticale des faisceaux lumineux élémentaires $HD_{i,j}$ qu'elles sont aptes à émettre soit croissante vers le haut du faisceau lumineux pixélisé. En particulier :

a. Chacune des sources lumineuses élémentaires dont le cône d'émission appartient à la plage verticale angulaire de -1° à +1° est apte à émettre un faisceau lumineux élémentaire dont l'ouverture angulaire verticale est sensiblement de 0,25°;

b. Chacune des sources lumineuses élémentaires dont le cône d'émission appartient à la plage verticale angulaire de +1° à +2° est apte à émettre un faisceau lumineux élémentaire dont l'ouverture angulaire verticale est sensiblement de 0,3°;

c. Chacune des sources lumineuses élémentaires dont le cône d'émission appartient à la plage verticale angulaire de +2° à +3° est apte à émettre un faisceau lumineux élémentaire dont l'ouverture angulaire verticale est sensiblement de 0,35°;

d. Chacune des sources lumineuses élémentaires dont le cône d'émission appartient à la plage verticale angulaire de +3° à +5° est apte à émettre un faisceau lumineux élémentaire dont l'ouverture angulaire verticale est sensiblement de 0,4°.

Le module lumineux 31 comporte un contrôleur 34 agencé pour contrôler le contrôleur intégré de la source lumineuse pixélisé 32 de sorte à contrôler sélectivement l'allumage, l'extinction et la modification de l'intensité lumineuse de chacun des faisceaux lumineux élémentaires $HD_{i,j}$, en fonction d'instructions reçues d'un contrôleur 4 du véhicule hôte 1, ces instructions étant notamment déterminées à partir des informations fournies par le calculateur 22 du système de capteur 2 et par un système de navigation 11 du véhicule hôte 1.

On notera que dans l'exemple décrit, il est considéré que le laser-scanner 21 et le module lumineux 31 sont sensiblement disposés au même niveau.

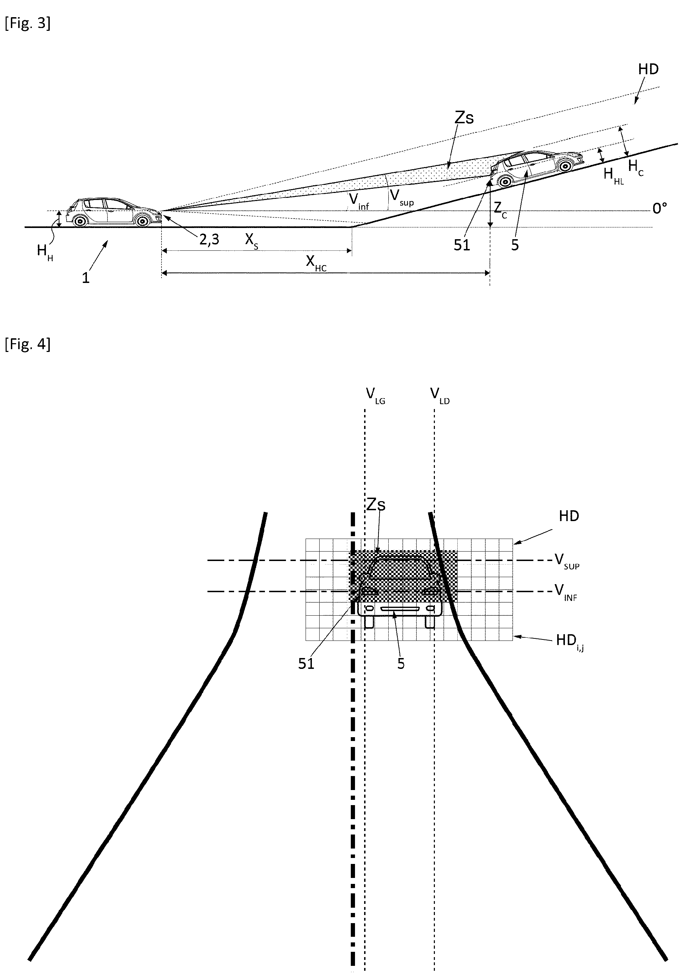

On a représenté en [Fig. 2] un procédé de commande du système d'éclairage 3 du véhicule hôte 1 permettant l'émission par le système d'éclairage 3 d'un faisceau lumineux de type route non éblouissant pour un objet cible 5, mis en œuvre par le contrôleur 4, et à l'aide du système de capteur 2 et du système de navigation 11. On a représenté des vues de côté en [Fig. 3] et de face en [Fig. 4] de la scène de route sur laquelle est projeté ce faisceau lumineux, lors de la mise en œuvre de ce procédé. Il est à noter que ces [Fig. 3] et [Fig. 4] ne représentent que des vues partielles de ce faisceau lumineux.

Dans une première étape E1, le système de capteur 2 détecte la présence d'un objet cible 5, en l'occurrence un véhicule cible 5, sur la route. Dans l'exemple décrit, le calculateur 22 met en œuvre un ou plusieurs procédés de traitement des signaux reçus par l'émetteur-récepteur du laser-scanner 21 permettant de détecter le véhicule cible 5. Il pourra par exemple s'agir de procédés de mesure du temps de vol de la lumière émise et reçue, après réflexion sur la route ou sur un objet sur la route, par l'émetteur-récepteur du laser-scanner, et d'analyse de ce temps de vol pour détecter la présence du véhicule cible.

Dans une deuxième étape E2, le calculateur 22 du système de capteur 2 la distance $X_{HC}$ séparant l'émetteur-récepteur du laser-scanner 21 du véhicule hôte du véhicule cible 5. En outre, le calculateur 22 classifie le type du véhicule cible parmi un ensemble de types de véhicule prédéterminés et détermine, à partir du type du véhicule cible 5 qui a été sélectionné, la hauteur $H_c$ du véhicule cible 5 et la hauteur $H_{HL}$ des feux arrières 51 du véhicule cible 5. Chacune de ces opérations peut être opérée par un ou plusieurs algorithmes de traitement des signaux reçus par l'émetteur-récepteur du laser-scanner 21 et mis en œuvre par le calculateur 22. L'ensemble de ces informations $X_{HC}$, $H_C$, $H_{HL}$ sont transmis par le calculateur 22 au contrôleur 4.

Dans une étape E2', le système de navigation 11 du véhicule hôte transmet des informations relatives à la route sur laquelle circulent le véhicule hôte et le véhicule cible 1. En particulier, le système de navigation 11 détermine la pente S de la route au niveau de la position du véhicule cible 5, à partir de la position connue du véhicule hôte 1 et de la distance $X_{HC}$ qui lui est transmise par le contrôleur 4. Le système de navigation détermine également la distance $X_S$ entre le véhicule hôte 1 et le début de la pente de la route sur laquelle circule le véhicule cible 5.

Dans une étape E3, le contrôleur 4 compare la valeur de la pente S à un seuil inférieur $S_{min}$, par exemple -13%, et à un seuil supérieur $S_{max}$, par exemple +13%. Si la pente n'est pas comprise entre $S_{min}$ et $S_{max}$, le procédé s'arrête, dans la mesure où il est possible de déduire que les véhicules hôte 1 et cible 5 circulent sur une route dont la pente ne permet pas ou ne nécessite pas une fonction de type route non éblouissant. Dans le cas où la pente S est comprise dans entre $S_{min}$ et $S_{max}$, le procédé passe à l'étape suivante.

Dans une étape E4, le contrôleur 4 détermine une hauteur relative $Z_C$ entre le système d'éclairage 3 du véhicule hôte 1 et les feux arrière 51 du véhicule cible 5, au moyen de l'équation suivante :

[Math 4]

$$Z_C = \frac{H_{HL}}{\sin(\frac{\pi}{2} - S)} + \tan(S).(X_{HC} - X_S) + H_H$$

Où $Z_C$ est la hauteur relative entre le véhicule hôte 1 et le véhicule cible 5, $H_{HL}$ la hauteur des feux arrière 51 du véhicule cible 5, S la pente de la route sur laquelle circule le véhicule cible 5, $X_{HC}$ la distance séparant le véhicule hôte 1 et le véhicule cible 5, $X_S$ la distance séparant le véhicule hôte 1 du début de la pente de la route sur laquelle circule le véhicule cible 5 et $H_H$ la hauteur du système de capteur 2 du véhicule hôte 1.

La hauteur relative $Z_C$ qui a été déterminé par le contrôleur 4 est relatif à la position du véhicule cible 5 à l'instant t de sa détection par le calculateur 22. Or, les différents procédés mis en œuvre par le calculateur 22 du système de capteur 2 ainsi que les étapes du procédé selon l'invention qui vont être ultérieurement décrites et qui permettent la génération du faisceau de type route non éblouissant par le système d'éclairage 3 requièrent un temps d'exécution donné ΔT, au bout duquel le faisceau est effectivement émis. Pendant ce temps ΔT, le véhicule cible 5 peut s'être déplacé de sorte que la valeur de la hauteur relative $Z_C$ ne corresponde plus à la position réelle du véhicule cible 5 lors de l'émission du faisceau.

Afin de compenser cette latence, lors d'une étape E5, le contrôleur 4 prédit une valeur d'une hauteur relative $Z_C'$ entre le véhicule hôte 1 et les feux arrières 51 du véhicule cible 5 à un instant futur t+Δt par rapport au temps t de la détection par le calculateur 22 du véhicule cible 5 à l'étape E1. A ces fins, le contrôleur 4 détermine une vitesse verticale Z du véhicule cible 5, par dérivation des valeurs des différentes valeurs de la hauteur vertical $Z_C$ précédemment déterminées aux étapes E4. La valeur prédite $Z_C'$ peut ainsi être obtenue au moyen de l'équation suivante :

[Math 5]

$$Z_C' = Z_C + \dot{Z}.\Delta t$$

Où $Z_C$ est la valeur de la hauteur relative à l'instant t déterminée lors de l'étape E4, $Z_C'$ la valeur prédite de la hauteur relative à l'instant futur t+$\Delta$t, Z la vitesse verticale du véhicule cible 5 et $\Delta$t le temps de latence du procédé selon l'invention.

Dans une étape E6, le contrôleur 4 détermine un angle inférieur $V_{inf}$ entre le module lumineux 31 et les feux arrière 51 du véhicule cible 5, au moyen de l'équation suivante :

[Math 6]

$$V_{inf} = \tan^{-1}(\frac{Z'_C}{X_{HC}})$$

Où $V_{inf}$ est l'angle inférieur, $Z'_C$ est la hauteur relative prédite à l'étape E5 et $X_{HC}$ la distance séparant le véhicule hôte 1 et le véhicule cible déterminée à l'étape E2.

Par ailleurs, toujours dans l'étape E6, le contrôleur 4 détermine un angle supérieur $V_{sup}$, à partir de la valeur de l'angle inférieur $V_{inf}$ précédemment obtenue et de la hauteur du véhicule cible $H_C$ déterminée à l'étape E2, par exemple au moyen de l'équation suivante :

[Math 7]

$$V_{sup} = \tan^{-1}\left(\frac{H_C - H_{HL})}{X_{HC}}\right) + V_{inf}$$

Où $V_{sup}$ est l'angle supérieur, $H_{HL}$ la hauteur des feux arrières 51 du véhicule cible 5, $X_{HC}$ la distance séparant le véhicule hôte 1 et le véhicule cible 5, $H_c$ la hauteur du véhicule cible 5 et $V_{inf}$ la valeur de l'angle inférieur.

A l'issue de l'étape E6, le contrôleur 4 transmet la paire d'angles inférieur $V_{inf}$ et supérieur $V_{sup}$ au contrôleur 34 du module lumineux 31. En outre, dans des étapes non décrites, le contrôleur 4 détermine une paire d'angles latéraux respectivement droit $V_{LD}$ et gauche $V_{LG}$ à partir des positions des feux arrière 51 du véhicule cible 5 et transmet également cette paire d'angles au contrôleur 34.

Dans une étape E7, le contrôleur 34 sélectionne les sources lumineuses élémentaires $32_{i,j}$ de la source lumineuse 32 susceptibles d'émettre des faisceaux lumineux élémentaires $HD_{i,j}$ dont les cônes d'émission sont verticalement au moins partiellement compris entre les angles inférieur $V_{inf}$ et $V_{sup}$ et horizontalement au moins partiellement compris entre les angles latéraux droit $V_{LD}$ et gauche $V_{LG}$. Le contrôleur 34 contrôle ainsi l'extinction de ces sources lumineuses élémentaires $32_{i,j}$ sélectionnées tout en commandant l'allumage des autres sources lumineuses élémentaires. Le module lumineux 1 émet ainsi un faisceau lumineux pixélisé HD de type route, dans lequel est formée une zone sombre Zc centrée sur le véhicule cible 5 et définie verticalement par des coupures inférieure et supérieure faisant chacune un angle vertical avec le module lumineux 1, dont les valeurs respectives sont sensiblement de $V_{inf}$ et Vsup ; et horizontalement par des coupures latérales droite et gauche faisant chacune un angle horizontale avec le module lumineux 1, dont les valeurs respectives sont sensiblement de $V_{LD}$ et $V_{LG}$. On notera que le terme « sensiblement » doit être ici interprété au regard des résolutions verticale et horizontale du faisceau lumineux pixélisé HD.

La description qui précède explique clairement comment l'invention permet d'atteindre les objectifs qu'elle s'est fixée, et notamment en proposant un procédé de commande d'un système d'éclairage d'un véhicule hôte qui contrôle l'allumage ou l'extinction des sources lumineuses élémentaires du système d'éclairage, de sorte à générer une zone sombre dans un faisceau lumineux pixélisé délimitée par une coupure supérieure et une coupure inférieure dont les positions sont déterminées à partir d'informations issues d'un système de capteur du véhicule hôte, et notamment relatives à la position verticale d'un objet cible sur la route à ne pas éblouir.

En tout état de cause, l'invention ne saurait se limiter aux modes de réalisation spécifiquement décrits dans ce document, et s'étend en particulier à tous moyens équivalents et à toute combinaison techniquement opérante de ces moyens. En particulier, on pourra envisager d'autres types de module lumineux que celui décrit, et en particulier un module lumineux comportant une association d'une source lumineuse et d'une matrice de micro-miroirs activables sélectivement. On pourra également envisager d'autres modes de détermination des différentes valeurs employées dans les équations permettant de déterminer les valeurs des angles inférieur et supérieur, voire d'autres équations que celles qui ont été décrites, et notamment des équations intégrant des marges permettant de déplacer verticalement la position des coupures supérieure et inférieure de la zone sombre dans le faisceau lumineux pixélisé.

## Revendications

1. Procédé de commande d'un système d'éclairage (3) d'un véhicule automobile hôte (1) circulant sur une portion de route horizontale précédant une portion de pente constante sur laquelle se trouve un objet cible (5), le système d'éclairage (3) comprenant une pluralité de sources lumineuses élémentaires ($32_{i,j}$) contrôlables sélectivement, chaque source lumineuse élémentaire ($32_{i,j}$) étant apte à émettre un faisceau lumineux élémentaire ($HD_{i,j}$) dont l'ouverture angulaire verticale est inférieure à 1°, le procédé comportant les étapes suivantes :

   • (E1) Détection de l' objet cible (5) par un système de capteur (2) du véhicule hôte (1) ;
   • (E2, E2') Détermination d'une distance relative horizontale ($X_{HC}$) entre un point donné du système de capteur (2) du véhicule hôte (1) et un point détecté de l'objet cible (5) et détermination d'une pente (S) de la portion de la route sur laquelle est disposé l'objet cible (5), détermination d'une distance (Xs) entre le véhicule hôte (1) et le début de la pente (S) de la route sur laquelle est disposé l'objet cible (5);
   • (E4) Détermination d'une hauteur relative (Zc) entre un point donné du système d'éclairage (3) du véhicule hôte (1) et un point donné de l'objet cible (5) selon l'équation

   $$Zc = HHL - HH + S * (X_{HC} - Xs)$$

   où HHL est la hauteur d'une source lumineuse de l'objet cible, HH est la hauteur du système de capteur du véhicule hôte ;
   • (E6) Détermination, à partir de ladite hauteur relative (Zc) et de la distance relative ($X_{HC}$), d'un angle inférieur ($V_{inf}$) et d'un angle supérieur ($V_{sup}$) entre ledit point donné du système d'éclairage du véhicule hôte (1) et respectivement une coupure haute et une coupure basse destinées à délimiter verticalement l'objet cible (5) ;
   • (E7) Contrôle des sources lumineuses élémentaires ($32_{i,j}$) du système d'éclairage (3) du véhicule hôte (1) pour émettre un faisceau lumineux pixélisé (HD) de type route, une partie des sources lumineuses élémentaires ($32_{i,j}$) étant contrôlées, en fonction desdits angles inférieur et supérieur, pour générer dans le faisceau lumineux une zone sombre ($Z_s$) s'étendant sensiblement entre lesdites coupures haute et basse.

2. Procédé selon la revendication précédente, le procédé comportant une étape intermédiaire (E3) de comparaison de ladite pente (S) à un seuil inférieur ($S_{min}$) et un seuil supérieur ($S_{sup}$), la réalisation de l'étape (E6) de détermination des angles inférieur ($V_{inf}$) et supérieur ($V_{sup}$) étant conditionnée au fait que ladite pente soit compris entre le seuil inférieur et le seuil supérieur.

3. Procédé selon l'une des revendications précédentes, le procédé comportant une étape de détermination (E4), à partir de ladite distance relative ($X_{HC}$) et de ladite pente (S), d'une hauteur relative ($Z_C$) entre ledit point donné du système d'éclairage (3) du véhicule hôte (1) et ledit point donné (51) de l'objet cible (5) au niveau duquel doit être positionnée ladite coupure basse, les angles inférieur ($V_{inf}$) et supérieur ($V_{sup}$) étant déterminés à partir de ladite distance relative, de ladite pente et de ladite hauteur relative.

4. Procédé selon l'une des revendications précédentes, dans lequel l'étape de détermination (E4) de ladite hauteur relative ($Z_c$) est une étape de détermination d'une hauteur relative entre ledit point donné du système d'éclairage (3) du véhicule hôte (1) et dudit point donné (51) de l'objet cible (5) au niveau duquel doit être positionnée ladite coupure basse à un instant donné (t), le procédé comportant une étape de prédiction (E5) d'une valeur ($Z'_C$) de ladite hauteur relative à un instant futur (t+Δt) par rapport à l'instant donné.

5. Procédé selon la revendication précédente, dans lequel l'étape de prédiction (E5) comporte une étape de détermination d'une vitesse verticale (Z) de l'objet cible (5), la prédiction de la valeur de la hauteur relative ($Z'_C$) à un instant futur (t+Δt) étant réalisée à l'aide de la vitesse verticale de l'objet cible.

**6.** Procédé selon l'une des revendications 3 à 5, dans lequel la valeur de l'angle inférieur ($V_{inf}$) est déterminée au moyen de ladite hauteur relative ($Z_c$) et de ladite distance relative ($X_{HC}$).

**7.** Procédé selon la revendication précédente, le procédé comportant une étape de détermination (E2) de la hauteur ($H_C$) de l'objet cible (5), la valeur de l'angle supérieur ($V_{sup}$) étant déterminée au moyen de la valeur de l'angle inférieur ($V_{inf}$) et de ladite hauteur déterminée.

**8.** Procédé selon la revendication précédente, dans lequel l'étape de détection (E1) de l'objet cible (5) comporte la classification du type de l'objet cible parmi un ensemble de types d'objet cible prédéterminés, et dans lequel la hauteur ($H_C$) de l'objet cible est déterminée en fonction du type de l'objet cible classifié.

**9.** Procédé selon l'une des revendications précédentes, dans lequel l'étape de contrôle (E7) des sources lumineuses élémentaires ($32_{i,j}$) du système d'éclairage (3) du véhicule hôte (1) comporte l'extinction de certaines sources lumineuses élémentaires susceptibles d'émettre chacune un faisceau lumineux élémentaire ($HD_{i,j}$) entre les coupures supérieure et inférieure.

**10.** Véhicule automobile (1) comprenant un système de capteur (2), un système d'éclairage (3) et un contrôleur (4), le contrôleur étant agencé pour mettre en œuvre le procédé selon l'une des revendications précédentes.

**Patentansprüche**

**1.** Verfahren zur Steuerung eines Beleuchtungssystems (3) eines Kraftfahrzeugs (1), das auf einem horizontalen Straßenabschnitt vor einem Abschnitt mit konstanter Steigung fährt, auf dem sich ein Zielobjekt (5) befindet, wobei das Beleuchtungssystem (3) eine Vielzahl von selektiv steuerbaren Elementarlichtquellen ($32_{i,j}$) umfasst, wobei jede Elementarlichtquelle ($32_{i,j}$) in der Lage ist, einen elementaren Lichtstrahl ($HD_{i,j}$) mit einer vertikalen Öffnungswinkel von weniger als 1° auszusenden, wobei das Verfahren die folgenden Schritte umfasst:

- (E1) Erkennung des Zielobjekt (5) durch ein Sensorsystem (2) des Trägerfahrzeugs (1) ;
- (E2, E2') Bestimmung einer horizontalen relativen Entfernung ($x_{HC}$) zwischen einem gegebenen Punkt des Sensorsystems des Sensorsystems (2) des Trägerfahrzeugs (1) und einem erfassten Punkt des Zielobjekts (5) und Bestimmung einer Steigung (S) des Abschnitts der, auf dem das Zielobjekt (5) angeordnet ist, Bestimmung einer Entfernung (Xs) zwischen dem Gastfahrzeugs (1) und dem Anfang der Steigung (S) der Straße, auf der das Zielobjekt (5) angeordnet ist;
- (E4) Bestimmung einer relativen Höhe (Zc) zwischen einem bestimmten Punkt des Beleuchtungssystems (3) des Trägerfahrzeugs (1) und einem gegebenen Punkt des Zielobjekts (5) gemäß der Gleichung

$$Zc = HHL - HH + S * (X_{HC} - Xs)$$

wobei HHL die Höhe einer Lichtquelle des Zielobjekts ist, HH die Höhe des Sensorsystems des Hostfahrzeugs ist;
- (E6) Bestimmung des unteren Winkels ($V_{inf}$) und des oberen Winkels ($V_{sup}$) zwischen dem gegebenen Punkt eines unteren Winkels ($V_{inf}$) und eines oberen Winkels ($V_{sup}$) zwischen dem gegebenen Punktdes Beleuchtungssystems des Hostfahrzeugs (1)und einer oberen und einer unteren Hell-Dunkel-Grenze zur vertikalen Begrenzung des Zielobjekts (5) ;
- (E7) Steuerung der elementaren Lichtquellen ($32_{i,j}$) des Beleuchtungssystems (3) des (1) um einen pixelierten Lichtstrahl (HD) vom Typ "Straße" auszusenden, wobei ein Teil der elementaren Lichtquellen ($32_{i,j}$) gesteuert wird, in Abhängigkeit von den unteren und oberen Winkeln,

gesteuert wird, um im Lichtstrahl einen dunklen Bereich ($Z_s$) zu erzeugen, der sich im Wesentlichen zwischen den genannten oberen und unteren Abschnitten erstreckt.

**2.** Verfahren nach dem vorhergehenden Anspruch, wobei das Verfahren einen Zwischenschritt Zwischenschritt (E3) zum Vergleichen der Neigung (S) mit einem unteren Schwellenwert ($S_{min}$) und einem oberen Schwellenwert ($S_{sup}$) umfasst, wobei die Durchführung des Schritts (E6) zum Bestimmen des unteren Winkels ($V_{inf}$) und des oberen Winkels ($V_{sup}$) unter der Bedingung, dass die Steigung zwischen dem unteren Schwellenwert und dem oberen Schwellenwert liegt.

3. Verfahren nach einem der vorstehenden Ansprüche, wobei das Verfahren umfasst einen Schritt zum Bestimmen (E4) einer relativen Höhe ($Z_c$) zwischen dem gegebenen Punkt des Beleuchtungssystems (3) des (1) und dem gegebenen Punktes (51) des Zielobjektes (5), auf den die untere Hell-Dunkel-Grenze positioniert werden soll, wobei der untere ($V_{inf}$) und der obere Winkel ($V_{sup}$) anhand des relativen Abstands, der Neigung und der relativen Höhe bestimmt werden.

4. Verfahren nach einem der vorstehenden Ansprüche, wobei der Schritt zum Bestimmen (E4) der relativen Höhe (Ze) ein Schritt zum Bestimmen einer relativen Höhe zwischen dem gegebenen Punkt des Beleuchtungssystems (3) des Hostfahrzeugs (1) und dem gegebenen Punktes (51) des Zielobjektes (5), an dem die Unterbrechung zu einem gegebenen Zeitpunkt (t) positioniert werden soll, wobei das Verfahren einen Schritt zum Vorhersagen (E5) eines Wertes ($Z'_C$) der relativen Höhe zu einem zukünftigen Zeitpunkt (t+$\Delta$t) in Bezug auf den gegebenen Zeitpunkt umfasst.

5. Verfahren nach dem vorhergehenden Anspruch, wobei der Vorhersageschritt (E5) einen Schritt zum Bestimmen einer vertikalen Geschwindigkeit (Z) des Zielobjekts (5) umfasst, wobei die Vorhersage des Wertes der relativen Höhe ($Z'_C$) zu einem zukünftigen Zeitpunkt (t+$\Delta$t) anhand der vertikalen Geschwindigkeit des Zielobjekts durchgeführt wird.

6. Verfahren nach einem der Ansprüche 3 bis 5, wobei der Wert des unteren Winkels ($V_{inf}$) anhand der relativen Höhe ($Z_c$) und des relativen Abstands ($X_{HC}$) bestimmt wird.

7. Verfahren nach dem vorhergehenden Anspruch, wobei das Verfahren einen Schritt zum Bestimmen (E2) der Höhe ($H_C$) des Zielobjekts (5) umfasst, wobei der Wert des oberen Winkels ($V_{sup}$) anhand des Werts des unteren Winkels ($V_{inf}$) und der bestimmten Höhe bestimmt wird.

8. Verfahren nach dem vorhergehenden Anspruch, wobei der Schritt des Erfassens (E1) des Zielobjekts (5) das Klassifizieren des Typs des Zielobjekts aus einer Gruppe vorbestimmter Zielobjekttypen umfasst und wobei die Höhe ($H_C$) des Zielobjekts in Abhängigkeit vom klassifizierten Typ des Zielobjekts bestimmt wird.

9. Verfahren nach einem der vorhergehenden Ansprüche, wobei der Schritt des Steuerens (E7) der Elementarlichtquellen ($32_{i,j}$) des Beleuchtungssystems (3) des Hostfahrzeugs (1) das Ausschalten bestimmter Elementarlichtquellen umfasst, die jeweils einen Elementarlichtstrahl ($HD_{i,j}$) zwischen der oberen und unteren Unterbrechung aussenden können.

10. Kraftfahrzeug (1) mit einem Sensorsystem (2), einem Beleuchtungssystem (3) und einer Steuereinheit (4), wobei die Steuereinheit so ausgelegt ist, dass sie das Verfahren gemäß einem der vorstehenden Ansprüche ausführt.

**Claims**

1. Method for controlling a lighting system (3) of a motor vehicle host vehicle (1) traveling on a horizontal road section preceding a constant slope section on which a target object (5) is located, the lighting system (3) comprising a plurality of elementary light sources ($32_{i,j}$) that can be selectively controlled, each elementary light source ($32_{i,j}$) being capable of emitting an elementary light beam ($HD_{i,j}$) whose vertical angular aperture is less than 1°, the method comprising the following steps:

   • (E1) Detection of the target object (5) by a sensor system (2) of the host vehicle (1)
   • ; (E2, E2') Determination of a relative horizontal distance ($X_{HC}$) between a given point of the sensor system (2) of the host vehicle (1) and a detected point of the target object (5) and determination of a slope (S) of the portion of the road on which the target object (5) is located, determining a distance (Xs) between the host vehicle (1) and the beginning of the slope (S) of the road on which the target object (5) is located;
   • (E4) Determining a relative height (Zc) between a given point of the lighting system (3) of the host vehicle (1) and a given point on the target object (5) according to the equation

$$Zc = HHL - HH + S * (X_{HC} - Xs)$$

   where HHL is the height of a light source of the target object, HH is the height of the sensor system of the host vehicle;
   • (E6) Determination, based on said relative height (Zc) and relative distance ($X_{HC}$),
   a lower angle ($V_{inf}$) and an upper angle ($V_{sup}$) between said given point of the host vehicle's lighting system (1) and respectively a high cut-off and a low cut-off intended to delimit the target object (5) vertically;

• (E7) Controlling the elementary light sources ($32_{i,j}$) of the lighting system (3) of the host vehicle (1) to emit a pixelated (HD) light beam of the road type, a portion of the elementary light sources ($32_{i,j}$) being controlled, depending on said lower and upper angles,

to generate a dark area ($Z_s$) in the light beam extending substantially between said upper and lower cut-offs.

2. Method according to the previous claim, the method comprising an intermediate step of comparing said slope (S) to a lower threshold ($S_{min}$) and an upper threshold ($S_{sup}$), the performance of step (E6) of determining the lower ($V_{inf}$) and upper angles ($V_{sup}$) being conditional on the fact that said slope is between the lower threshold and the upper threshold.

3. Method according to one of the preceding claims, the method comprising a step of determining (E4), based on said relative distance ($X_{HC}$) and said slope (S), a relative height (Zc) between said given point of the vehicle lighting system (3) host vehicle (1) and said given point (51) of the target object (5) at which said lower cutoff is to be positioned, the lower ($V_{inf}$) and upper ($V_{sup}$) angles being determined from said relative distance, said slope, and said relative height.

4. A method according to one of the preceding claims, wherein the step of determining (E4) said relative height ($Z_c$) is a step of determining a relative height between said given point of the lighting system (3) of the host vehicle (1) and said given point (51) of the target object (5) at which said low cut-off is to be positioned at a given time (t), the method comprising a step of predicting (E5) a value ($Z'_C$) of said relative height at a future time (t+$\Delta$t) relative to the given time.

5. Method according to the previous claim, in which the prediction step (E5) comprises a step of determining a vertical velocity (Z') of the target object (5), the prediction of the value of the relative height ($Z'_C$) at a future time (t+$\Delta$t) being performed using the vertical velocity of the target object.

6. A method according to any one of claims 3 to 5, wherein the value of the lower angle ($V_{inf}$) is determined by means of said relative height ($Z_c$) and said relative distance ($X_{HC}$).

7. Method according to the previous claim, the method comprising a step of determining (E2) the height ($H_C$) of the target object (5), the value of the upper angle ($V_{sup}$) being determined by means of the value of the lower angle ($V_{inf}$) and said determined height.

8. A method according to the preceding claim, wherein the step of detecting (E1) the target object (5) includes classifying the type of the target object from among a set of predetermined target object types, and wherein the height ($H_c$) of the target object is determined based on the classified type of the target object.

9. A method according to one of the preceding claims, wherein the step of controlling (E7) the elementary light sources ($32_{i,j}$) of the lighting system (3) of the host vehicle (1) comprises turning off certain elementary light sources capable of emitting an elementary light beam ($HD_{i,j}$) between the upper and lower cut-offs.

10. Motor vehicle (1) comprising a sensor system (2), a lighting system (3) and a controller (4), the controller being arranged to implement the method according to one of the preceding claims.

[Fig. 1]

[Fig. 2]

[Fig. 3]

[Fig. 4]